# EUROPEAN PATENT SPECIFICATION

(11) **EP 3 614 513 B1**
(45) Date of publication and mention of the grant of the patent: **03.11.2021**
(21) Application number: 17907142.8
(22) Date of filing: 28.12.2017
(51) Int. Cl.: H02H 3/16, B60M 3/00, H02H 3/00, H02H 7/26, H02H 3/38

(54) **DC GROUND FAULT DETECTION SYSTEM AND DC GROUND FAULT DETECTION METHOD FOR DC ELECTRIC RAILWAY**
GLEICHSTROM-ERDFEHLERDETEKTIONSSYSTEM UND GLEICHSTROM-ERDFEHLERDETEKTIONSVERFAHREN FÜR ELEKTRISCHE GLEICHSTROMSCHIENEN
SYSTÈME ET PROCÉDÉ DE DÉTECTION DE DÉFAUT À LA TERRE DE COURANT CONTINU DE CHEMIN DE FER ÉLECTRIQUE À COURANT CONTINU

(30) Priority: 26.04.2017 JP 2017086743; 20.09.2017 JP 2017179982
(43) Date of publication of application: 26.02.2020
(73) Proprietor: Meidensha Corporation, Tokyo 141-6029 (JP)
(72) Inventor: IKEDA, Hiroto, Tokyo 141-6029 (JP); FUKUDA, Kazuo, Tokyo 141-6029 (JP)
(74) Representative: Manitz Finsterwald Patent- und Rechtsanwaltspartnerschaft mbB
(86) International application number: PCT/JP2017/047213
(87) International publication number: WO 2018/198438

(56) References cited:
- EP-A1- 2 784 891
- JP-A- 2000 201 427
- JP-A- 2011 055 685
- JP-A- 2015 067 241
- KR-B1- 100 694 279
- KR-B1- 101 080 265

## Description

### Technical Field

The present invention relates to DC electric railway ground fault detection system and method for detecting a high resistance DC ground fault accident in a DC electric railway, discriminating an accident section and removing the ground fault accident with an automatic interruption of electric path.

### Background Art

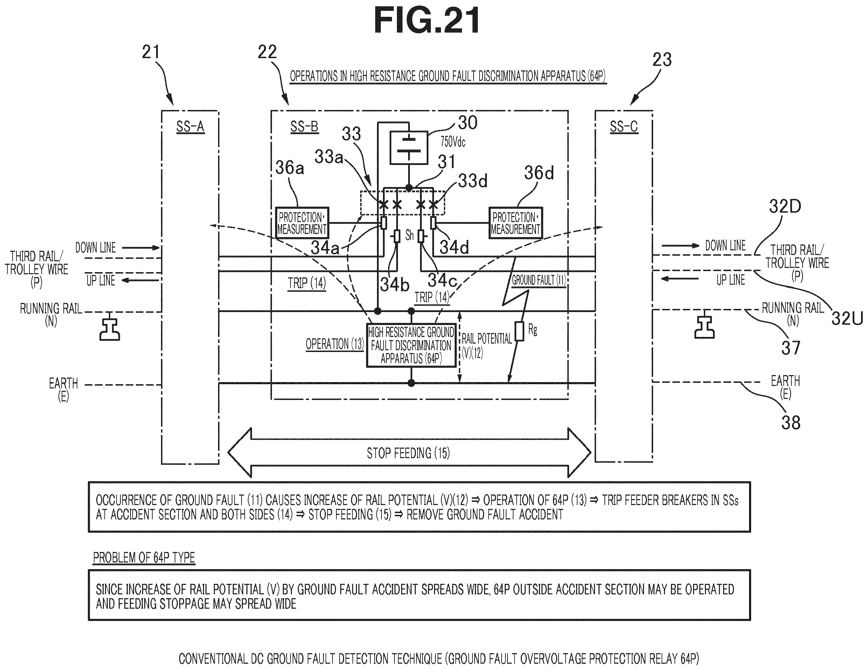

In a DC electric railway, one example of a DC ground fault detection system of earlier technology is explained with reference to FIG. 21. FIG. 21 shows three DC feeding substations 21∼23 (SS-A∼SS-C) among many DC feeding substations provided at predetermined intervals. For example, the DC feeding substation 22 (SS-B) is constructed as follows.

A DC power source 30 converts AC power from an AC power source not shown in the figure, to DC power with a transformer and a rectifier, and outputs DC voltage of 750 Vdc, for example. A positive terminal of the DC power source 30 is connected, through a DC bus 31, to down and up feeder lines 32D and 32U of a feeder (32), respectively. A negative terminal of the DC power source 30 is connected to rail(s) (return line) 37.

In electric paths or circuits connecting the DC bus 31, respectively, with the feeder lines 32D and 32U, there are interposed main contacts 33a∼33d of a DC high speed circuit breaker (HSCB) 33 (feeder circuit breaker) and current sensors 34a∼34d, respectively. There are further provided protection·measurement devices 36a∼36d for performing overcurrent protection calculation by using the sensed currents of current sensors 34a∼34d, respectively.

Between the rail 37 and an earth (ground) 38, there is connected a ground fault overvoltage relay 64P (high resistance ground fault protection relay).

The DC power outputted from the positive terminal of the DC power source 30 is supplied, through the DC bus 31 and up and down feeder lines 32D and 32U, to an unillustrated electric railway car or train (70) running under the feeder lines.

The DC feeding substation 21 (SS-A) and DC feeding substation 23 (SS-C) are constructed in the same manner.

In this description, the term "feeder line or feeder" is used to mean electrical conductor(s) including a feeder of feeder line connected with a DC bus of each substation, and a trolley line which is connected with the feeder line through a feeder branch line and which is to be contacted with a current collector of an electric railway car.

Moreover, a third rail provided near the running rails, for current collection and an overhead rigid conductor serving as the trolley line and the feeder line are also included in the term "feeder line or feeder".

In the thus-constructed DC electric railway system, if a ground fault trouble or accident (a ground fault resistance Rg) occurs between the down feeder line 32D and the earth 38 in the feeding section or interval of the DC feeding substation 22, for example (process (11)), then the potential (V) between the rail 37 and the earth 38 increases (process (12)).

The ground fault overvoltage relay 64P is operated when the above-mentioned potential increases to a point higher than or equal to a predetermined level (process (13)), and the ground fault overvoltage relay 64P trips (opens) each of the DC high speed circuit breakers 33 of the DC feeding substation 22 and the adjacent DC feeding substations 21 and 22 on both sides (process (14)).

By so doing, this system stops the feeding in the feeding section of the DC feeding substation 22 (process (15)), and removes the ground fault accident.

The ground fault over voltage relay 64P is used for the detection of a DC ground fault, as described in a following nonpatent document.

### Prior Art Documents

### NON-Patent Document

Non-patent Document 1: Latest Technologies of Electric Railway (Revised Edition), edited by Electric Railway Education and Investigation Technical Committee, The Institute of Electrical Engineers of Japan, Corona Publishing CO., Ltd, pp163, March 2012. Each of the following documents: KR100694279B1, KR101080265B1, and EP2784891A1 is related to ground fault discrimination in a DC railway system.

### Summary of the Invention

Railway facilities include many feeding substations arranged in a wide area. In the conventional DC ground fault detection system shown in FIG. 21, the ground fault overvoltage relay 64P detects a ground fault by checking an increase of the rail potential in the section of the DC feeding substation 22 in which the ground fault is produced. Furthermore, the ground fault is detected simultaneously by a plurality of the other ground fault overvoltage relays 64P outside the accident section, and hence the feeding operation is stopped in the sections outside the accident section.

The present invention provides a solution to the above-mentioned problem, and an object is to provide DC electric railway ground fault detection system, apparatus and/or method for discriminating a ground fault accident section accurately.

According to a first aspect of the present invention as defined in Claim 1, a DC ground fault detection system for detecting an DC ground fault in a DC electric railway to supply DC power to an electric railway car or train through feeder lines from a plurality of feeding substations, the DC ground fault detection system comprising:
a voltage limiting means which is provided in each of feeding sections of the feeding substations, which includes a short-circuit switch connected between a rail and an earth and arranged to be closed when a rail-earth voltage between the rail and the earth becomes higher than or equal to a preset voltage, and which is arranged to collect electric information including the rail-earth voltage and a passage current passing through the short-circuit switch after closure of the short-circuit switch; and
a ground fault discriminating means to discriminate a ground fault accident from a current magnitude, a conduction time and a conduction direction of the passage current flowing through the short-circuit switch by using the electric information collected by each of the voltage limiting means.

According to a second aspect of the present invention as defined in Claim 2, in the DC ground fault detection system of the aspect 1 as defined in Claim 1, each of the voltage limiting means and the ground fault discriminating means are so arranged that data can be sent and received therebetween;
the voltage limiting means is configured to deliver the collected electric information to the ground fault discriminating means, the ground fault discriminating means is configured to deliver a trip command to trip a feeder circuit breaker at least in an accident section in which the ground fault accident is judged to be present, to the voltage limiting means, and the voltage limiting means is configured to trip the feeder circuit breaker of at least the accident section in response to the trip command.

According to a third aspect as defined in Claim 3, in the DC ground fault detection system as defined in the second aspect of Claim 2, the ground fault discriminating means is configured to deliver the trip command to trip the feeder circuit breaker in a feeding section near the accident section, to the voltage limiting means; and the voltage limiting means is configured to trip the feeder circuit breaker of the feeding section near the accident section, in response to the trip command.

According to a fourth aspect of the present invention as defined in Claim 4, a DC ground fault detection method for a DC electric railway to supply DC power to an electric railway car through feeder lines from a plurality of feeding substations, the DC ground fault detection method comprising:
an information collecting step of collecting electric information with a voltage limiting means which is provided in each of feeding sections of the feeding substations, and which includes a short-circuit switch interposed between a rail and an earth and arranged to be closed when a rail-earth voltage becomes higher than or equal to a preset voltage, the electric information collected at the information collecting step including the rail-earth voltage and a passage current passing through the short-circuit switch after closure of the short-circuit switch; and
a ground fault discriminating step of discriminating a ground fault accident from a current magnitude, a conduction time and a conduction direction of the passage current flowing through the short-circuit switch, with a ground fault discriminating means, using the electric information.

According to a fifth aspect as defined in Claim 5, in the DC ground fault detection method according to the fourth aspect as defined in Claim 4, the DC ground fault detection method comprises:
an information sending step of sending the electric information collected by the voltage limiting means, from the voltage limiting means to the ground fault discriminating means which is connected with each of the voltage limiting means to enable exchange of data therebetween;
a trip command delivering step of delivering, from the ground fault discriminating means to the voltage limiting means, a trip command to trip a feeder circuit breaker at least in an accident section in which a ground fault accident is judged to be present; and
a tripping step of tripping the feeder circuit breaker of at least the accident section in response to the trip command with the voltage limiting means.

According to a sixth aspect of the present invention as defined in Claim 6, in the DC ground fault detection method according to the fourth or fifth aspect as defined in Claim 4 or 5, the ground fault discriminating step includes an operation of judging the ground fault accident to be present when the passage current collected by the voltage limiting means in each of the feeding sections of two adjacent feeding substations has a current magnitude greater than or equal to a preset magnitude value and has a conduction time longer than or equal to a predetermined time length.

According to a seventh aspect of the present invention as defined in Claim 7, in the DC ground fault detection method of the fourth or fifth aspect as defined in Claim 4 or 5, the ground fault discriminating step includes an operation of judging the ground fault accident to be present when the passage current collected by the voltage limiting means in the feeding section of one of the feeding substations has a current magnitude greater than or equal to a preset magnitude value and has a conduction time longer than or equal to a predetermined time length.

According to an eighth aspect of the present invention as defined in Claim 8, in the DC ground fault detection method according to one of the fourth to seventh aspects as defined in one of Claims 4 to 7, in the ground fault discriminating step, the ground fault accident is judged to be present when the conduction direction of the passage current of the short circuit switch collected by the voltage limiting means is from the ground to the rail.

According to a ninth aspect of the present invention as defined in Claim 9, in the DC ground fault detection method according to one of the fourth to eighth aspects as defined in Claims 4 to 8, in the ground fault discriminating step, the ground fault accident is discriminated in accordance with conditions in the plurality of the feeding sections, the conditions in the feeding sections including a presence/absence condition of an electric car load and an open/closed condition of the short-circuit switch.

According to a tenth aspect of the present invention as defined in Claim 10, in the DC ground fault detection method according to one of the fourth to ninth aspects as defined in Claims 4 to 9, the DC ground fault detection method comprises a ground fault discrimination threshold setting step of determining a threshold for discriminating the ground fault accident by performing a simulation of the ground fault accident, taking into consideration, influence of a great moving load of an electric railway car, with a ground fault discrimination threshold setting means.

According to an eleventh aspect of the present invention as defined in Claim 11, in the DC ground fault detection system according to the first aspect as defined in Claim 1, the ground fault discriminating means is configured to calculate a moving average voltage, over a predetermined time period, of the rail-earth voltage sensed and collected by the voltage limiting means, and to judge presence of a ground fault when the calculated moving average voltage exceeds a threshold.

According to an twelfth aspect of the present invention as defined in Claim 12, in the DC ground fault detection system according to the eleventh aspect as defined in Claim 11, the threshold is set equal to a sum of a maximum or greatest moving average voltage at a steady state and a predetermined tolerance.

According to a thirteenth aspect of the present invention as defined in Claim 13, in the DC ground fault detection system according to the eleventh or twelfth aspect as defined in Claim 11 or 12, the ground fault discriminating means is configured to discriminate a ground fault accident section in accordance with a distribution of passage currents through the short-circuit switches in the feeding sections collected by the voltage limiting means when a feeding voltage is applied in each of the feeding sections of the substations in a no-load state.
(1) It is possible to determine a feeding section of a ground fault accident accurately according to the first through thirteenth aspects of the present invention as defined tin Claims 1∼13.
(2) It is possible to disconnect the current path in the accident section by tripping the feeder circuit breaker in the discriminated accident section according to the second and fifth aspects of the present invention as defined tin Claims 2 and 5.
(3) It is possible to disconnect the current path(s) in nearby section(s) near the accident section by tripping the feeder circuit breaker(s) in the nearby feeding section(s) according to the third aspect of the present invention as defined in Claim 3.
(4) It is possible to judge the presence of a ground fault accident securely when the ground fault accident occurs at an intermediate position between two adjacent feeding substations, according to the sixth aspect of the present invention as defined in Claim 6.
(5) It is possible to judge the presence of a ground fault accident securely when the ground fault accident occurs in the feeding section of one feeding substation, according to the seventh aspect of the present invention as defined in Claim 7.
(6) It is possible to prevent misjudgment of a ground fault accident when the short-circuit switch is closed by an increase of the rail voltage due to variation of the load of a railway car or the like, according to the eighth aspect of the present invention as defined in Claim 8.
(7) It is possible to discriminate the ground fault accident section accurately by using proper criteria for discriminating the ground fault accident, according to the ninth aspect of the present invention as defined in Claim 9.
(8) It is possible to discriminate the ground fault accident section more accurately without being affected by a large capacity moving load of a railway car, according to the tenth aspect of the present invention as defined in Claim 10.
(9) It is possible to discriminate a high-resistance ground fault phenomenon without being affected by a large capacity moving load of a railway car, by using a moving average voltage, according to the eleventh to thirteenth aspect sof the present invention as defined in Claims 11∼13.

Generally, a minute or fine ground fault caused by insulation deterioration and other factors in the DC electric railway facilities is a phenomenon tending to be latent, without reaching a protective region of the feeding circuit. By using the moving average voltage method, it is possible to detect even such a minute ground fault phenomenon which is caused by deterioration of the insulator, etc. and which does not reach the protection region of the feeding circuit.

### Brief Description of the Drawings

FIG. 1 is a view showing an overall configuration of a DC ground fault detection system according to a practical example 1 of the present invention.
FIG. 2 is a view for illustrating main operations of the DC ground fault detection system according to the practical example 1.
FIG. 3 is a view of a simplified configuration of the DC ground fault detection system of the practical example 1, to illustrate one example of a path of current flowing through an electric car load.
FIG. 4 is a view showing the simplified configuration of the ground fault detection system of the practical example 1, to illustrate another example of the path of the current flowing through the electric car load.
FIG. 5 is a view of the simplified configuration of the ground fault detection system to illustrate one example of the path of the current flowing through the electric car load and the short-circuit switch of the voltage limiting device in the practical example 1.
FIG. 6 is a view of the simplified configuration of the ground fault detection system to illustrate the path of the accident current in the no-load state in the practical example 1.
FIG. 7 is a view of the simplified configuration of the ground fault detection system to illustrate one example of the path of the accident current in a state of an electric car load in the practical example 1.
FIG. 8 is a view of the simplified configuration of the ground fault detection system to illustrate another example of the path of the accident current in the state of an electric car load in the practical example 1.
FIG. 9 is a view for illustrating test conditions at the time of performing a simulation of a ground fault accident in the practical example 1.
FIG. 10 is a view for showing the result of the ground fault accident simulation in the practical example 1. Specifically, FIG. 10 shows a potential increase between the rail and the ground after the start of the simulation.
FIG. 11 is a view for showing the result of the ground fault accident simulation in the practical example 1, and specially FIG. 11 shows the open/closed state of the short circuit switch of the voltage limiting device in each DC feeding substation.
FIG. 12 is a view for showing the result of the ground fault accident simulation in the practical example 1, and FIG. 12 shows the waveform of the ground fault accident current.
FIG. 13 is a view for showing the result of the ground fault accident simulation in the practical example 1, and FIG. 13 shows the waveforms of the passage currents through the short-circuit switches of the voltage limiting devices in two adjacent feeding substations.
FIG. 14 is a view for showing the result of the ground fault accident simulation in the practical example 1, and FIG. 14 shows an operation of tripping a feeder circuit breaker in the discriminated ground fault accident section.
FIG. 15 is a view for showing the result of the ground fault accident simulation in the practical example 1, and FIG. 15 shows an operation of tripping the feeder circuit breakers in nearby feeding substations near the discriminated ground fault accident section.
FIG. 16 is a view showing an overall configuration of a DC ground fault detection system according to a practical example 2 of the present invention.
FIG. 17 is a view for illustrating an example of a calculation of calculating a moving average voltage (5 minutes) in the practical example 2.
FIG. 18 is a view showing the waveforms of the rail-earth voltage and the moving average voltage (5 minutes) by a car moving load in the steady state.
FIG. 19 is a view showing the waveforms of the rail-earth voltage and the moving average voltage (5 minutes) by a high resistance ground fault accident in the state of the car moving load.
FIG. 20 is a view showing the maximum and minimum values of the rail voltages and the maximum values of the moving average voltage (5 minutes) in 15 feeding substations of the same route, in one example.
FIG. 21 is a view showing an overall configuration of a DC ground fault detection system according to a conventional example.
FIG. 22 is a view showing one example of a conventional detection method for detecting an insulation deterioration in a DC cable.

### Mode(s) for carrying out the Invention

Although practical examples according to the present invention are explained below with reference to the drawings, the present invention is not limited to these practical examples. pr1

### (Practical Example 1)

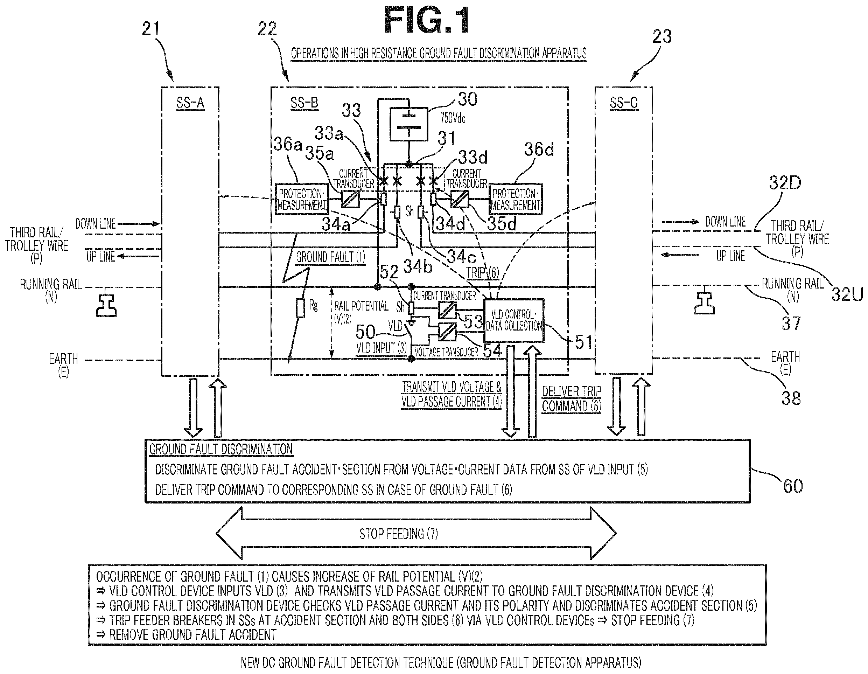

FIG. 1 shows a DC ground fault detection system according to a first practical example of the present invention. The same reference numerals as in FIG. 21 are given to identical parts, and repetitive explanation is omitted. In FIG. 1, there are provided a voltage limiting device (hereinafter also referred to as VLD) 50 and a VLD control and data collection device 51 for each of a plurality of feeding substations (21∼23 in the example shown in FIG. 1). There is further provided a ground fault discrimination device 60 for monitoring and controlling all the substations of a group.

The voltage limiting device 50 includes a short-circuit switch which is interposed between the rail 37 and the earth 38 and which is automatically inputted (automatically closed) by the VLD control and data collection device 51 when the rail-earth potential between the rail and earth is higher than or equal to a threshold value.

There are provided a current sensor 52 for sensing a current passing through the short-circuit switch of voltage limiting device 50, a current transducer or converter 53 for inputting the sensed current sensed by the current sensor 52, into the VLD control and data collection device 51, as a VLD passage current (Ivld), and a voltage transducer or converter 54 for sensing a voltage between the rail 37 and the earth 38 (the voltage between both terminals of the short-circuit switch of the voltage limiting device 50), and inputting the sensed voltage into the VLD control and data collection device 51, as a rail-earth voltage (Vvld).

The VLD control and data collection device 51 measures (collects) the VLD passage current (Ivld) from the current transducer 53 and the rail-earth voltage (Vvld) from the voltage transducer 54, and performs a function of controlling the input (closure of the short-circuit switch) and the opening of the VLD 50, a function of sending and receiving various information items including electric information items such as the VLD passage current (Ivld) and the rail-earth voltage (Vvld), to and from the ground fault discrimination device 60, a function of tripping the feeder circuit breaker(s) in the accident section in which the ground fault trouble is detected, in response to a later-mentioned trip command from the ground fault discrimination device 60, and other functions.

The ground fault discrimination device 60 performs a function of discriminating a ground fault accident and an accident section or interval from the current value of the VLD passage current (Ivld), the time or duration of the VLD passage current, the direction of the VLD passage current and other factors by using the electric information transmitted from the VLD control and date collection device(s) 51, a function of delivering the trip command to trip the feeder circuit breaker of the accident section (and the feeder circuit breaker or breakers in nearby feeding section or nearby feeding sections), to the VLD control and date collection device or devices 51, and other functions.

Current transducers or converters 35a∼35d are arranged to input currents sensed by current sensors 34a∼34d to the protection·measurement devices 36a∼36d, respectively.

In this embodiment, VLD(s) 50, current sensor(s) 52, current transducer(s) 53, voltage transducer(s) 54 and VLD control and data collection device(s) 51 serve a voltage limiting means according to the present invention.

In this practical example, the ground fault discrimination device 60 serve as a ground fault discriminating means according to the present invention.

The operation threshold of the voltage limitation device 50 (VLD) is explained hereinafter.

VLD is installed on the basis of "Standard IEC62128-1/EN50122-1 specifying the permissible touch voltage in case of contact of a human body with a rail". The permissible touch voltage is continuous in the case of 120VDC, within 300 seconds in the case of 150VDC, and within 0.6 second in the case of 300VDC.

A protective function is required for securing the safety of a human body by inputting VLD (closing the short-circuit switch) and thereby lowering the rail voltage. Therefore, the threshold for the operation of VLD is set within a range satisfying this requirement.

By utilizing this VLD function, the system according to the present invention determines a ground fault accident and an accident section or interval.

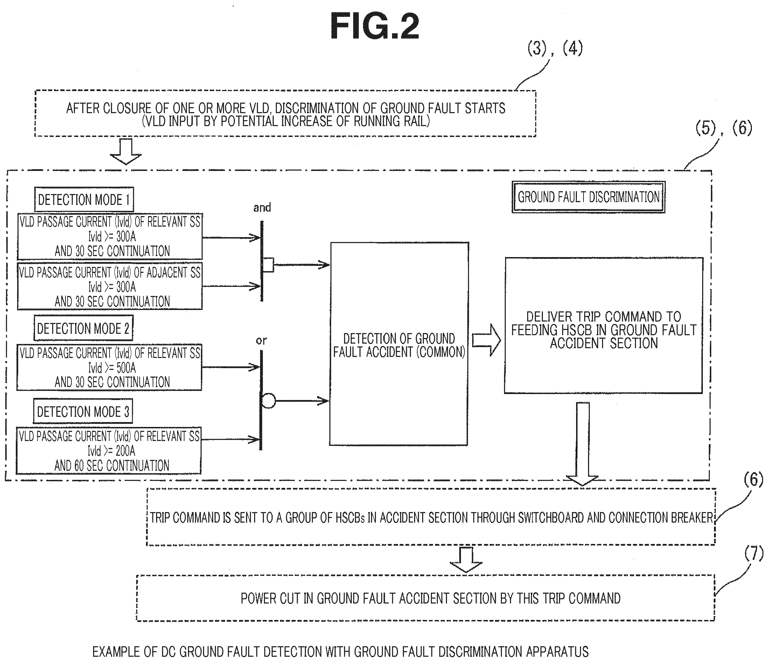

The thus-constructed DC ground fault detection system is operated in the following manner as shown in FIG. 1 and FIG. 2 showing operations of main parts shown in FIG. 1.

For example, a ground fault accident (ground fault resistance Rg) occurs between the down feeder line 32D and the earth 38 in the feeding section of the DC feeding substation 22 (process (1)). In this case, the earth potential becomes higher than the rail potential because the rail(s) is not grounded in the DC feeding system, and the potential (V) between the rail 37 and the earth 38 becomes higher (process (2)).

When the rail-earth voltage (Vvld) becomes higher than or equal to the threshold value for the VLD control, then the VLD control and data collection device 51 inputs the VLD 50 automatically (process (3)), and transmits electric information of the VLD passage current (Ivid) and the rail-earth voltage (Vvld) collected through the current transducer 53 and voltage transducer 54, to the ground fault discrimination device 60 (process (4)).

The ground fault discrimination device 60 performs a ground fault discrimination operation in accordance with the received electric information and transmits the trip command to the feeder circuit breaker of the feeding substation in the discriminated accident section (process (5)).

In response to the trip command, the VLD control and data collection device 51 on the recipient's side trips the feeder circuit breaker of the feeding substation of the accident section judged to be in trouble of the ground fault (process (6)). (Specifically, the tripping operation is performed by sending the trip command to a group of HSCBs (DC high speed circuit breakers 33) in the corresponding accident section, through a local switchboard and a connection breaker, for example.)

With this trip command, the system stops the feeding in the ground fault accident section (process (7)), and thereby removes the ground fault accident.

The above-mentioned connection breaker (or connective circuit breaker or interlinking circuit breaker or inter-section breaker) is a device for transmitting signal(s) for opening the feeder circuit breaker mutually between adjacent feeding substations in case of occurrence of a serious accident such as short-circuit in a feeding system and a ground fault. The connection breaker is used for interruption of current flow in feeding sections.

In the ground fault discrimination process, the ground fault discrimination device 60 performs the following three detecting modes, for example, by using the current value or magnitude and conduction time of the passage current through (the short-circuit switch of) the VLD 50.

### (1) Detection mode 1

When a ground fault accident occurs at a middle point between two adjacent feeding substations, an accident current flows dividedly through the two adjacent feeding substations. Accordingly, a judgment of occurrence of a ground fault accident is made when the VLD passage current (Ivld) having a value equal to or higher than 300A, for example, flows continuously during a time equal to or longer than 30 sec, for example, in each of the two adjacent feeding substations.

### (2) Detection mode 2

When a ground fault accident occurs near one of the feeding substations, the accident current flows concentratedly through the relevant feeding substation that is the feeding substation close to the point of the ground fault accident. Accordingly, a judgment of occurrence of a ground fault accident is made when the VLD passage current (Ivid) having a value equal to or higher than 500A, for example, flows continuously during a time equal to or longer than 30 sec, for example, in a single feeding substation.

### (3) Detection mode 3

Like the detection mode 2, a judgment of occurrence of a ground fault accident is made when the VLD passage current (Ivid) of a value equal to or higher than 200A, for example, flows continuously during a time equal to or longer than 60 sec, for example, in a single feeding substation.

### (4) As to the polarity of the VLD passage current (Ivld) in various situations

In the detection modes 1, 2 and 3, the direction of the current is limited to the current direction from the ground (earth 38) to the rail (37) at the time of ground fault accident (this current direction is defined as a plus polarity).

When the VLD 50 is inputted because of an increase of the rail-earth voltage (Vvld) beyond the threshold, VLD passage currents (Ivld) of both polarities (+ and -) are produced because the railway car is a moving load. However, in the case of the ground fault, the current flows in the direction from the earth 38 to the rail 37 (+ polarity). Therefore, the system can detect the ground fault by the current of the plus polarity.

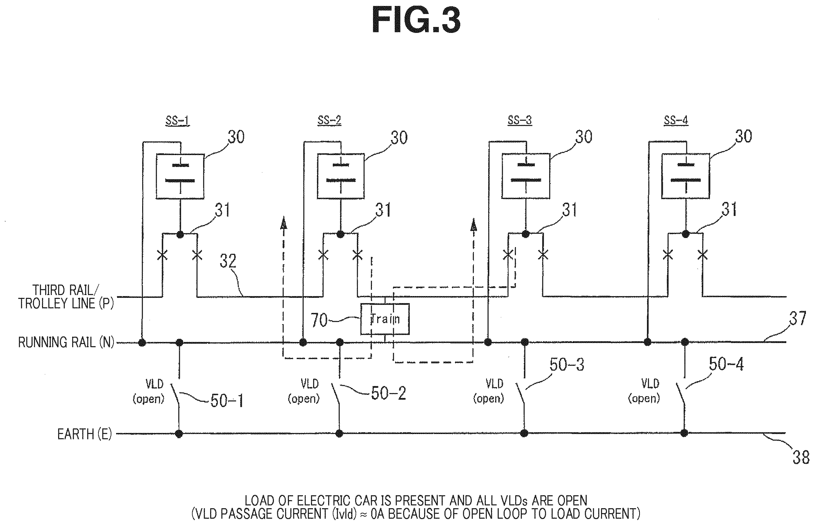

FIGS. 3∼8 show examples of paths of currents flowing in the feeding equipment. FIGS. 3∼8 are views showing the construction of the feeding equipment of FIG. 1 in a simplified form. In these examples, there are four feeding substations SS-1∼SS-4, the feeder is shown by a one feeder line 32, and only the elements relating to the current path are shown.

In the example of FIG. 3, an electric railway car 70 is running under the feeder line 32 between the feeding substation SS-2 and the feeding substation SS-3. VLD 50-1 ∼ VLD 50-4 provided, respectively, in the feeding sections of the four feeding substations are all in the open state.

Therefore, from the feeding substation SS-2, the current flows, as shown by a broken line arrow, in the form of a loop of the positive terminal of DC power source 30 → DC bus 31 → feeder line 32 → electric railway car 70 → rail 37 → the negative terminal of DC power source 30. Also, from the feeding substation SS-3, the current flows in a similar loop.

In the case of FIG. 3, all of VLD 50-1 ∼ VLD 50-4 are in the open state. Consequently, the VLD passage current Ivld ≈ 0 A.

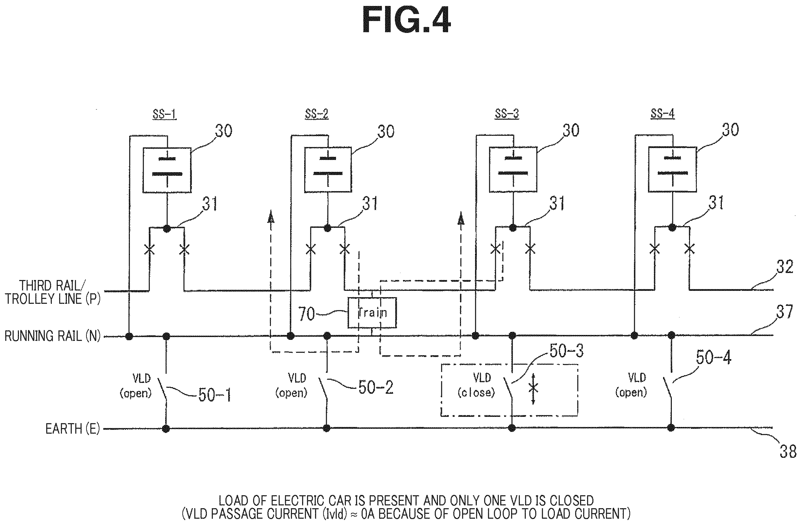

In the example of FIG. 4, the electric railway car 70 is running under the feeder line 32 between the feeding substation SS-2 and the feeding substation SS-3, and only the VLD 50-3 at the feeding substation SS-3 is in the closed state.

Therefore, from the feeding substation SS-2, the current flows in the form of a loop of the positive terminal of DC power source 30 → DC bus 31 → feeder line 32 → electric railway car 70 → rail 37 → the negative terminal of DC power source 30. Also, from the feeding substation SS-3, the current flows in a similar loop.

In the case of FIG. 4, VLD 50-3 is closed, but the adjacent VLD 50-2 is in the open state. Therefore, no current flow path is formed, and the VLD passage current Ivld ≈ 0 A.

Accordingly, the closure of VLD 50-3 is caused by a mere voltage increase by the load or some other reason, and the system does not judge an occurrence of an accident.

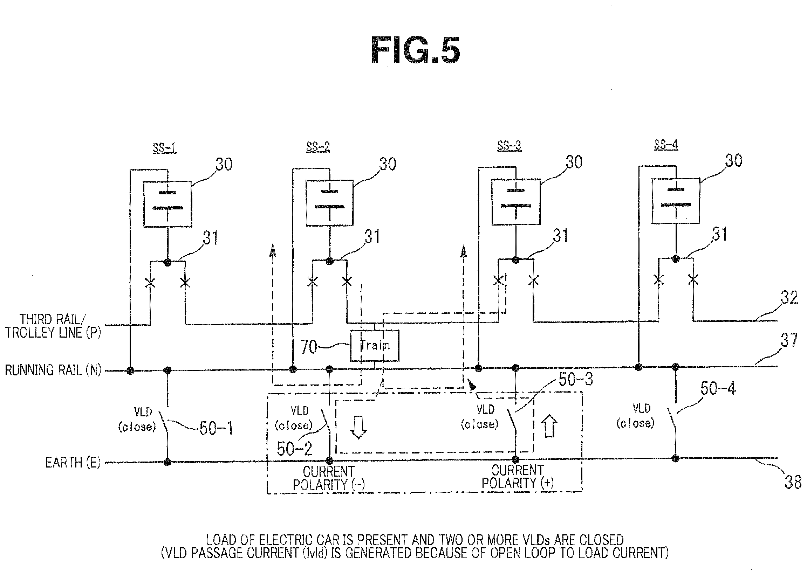

In the example of FIG. 5, the electric railway car 70 is running under the feeder line 32 between the feeding substation SS-2 and the feeding substation SS-3. VLD 50-1 ∼ VLD 50-4 at all the feeding substations SS-1 ∼ SS-4 are in the closed state.

Therefore, from the feeding substation SS-2, as shown by a broken line arrow, the current flows in the form of a loop of the positive terminal of DC power source 30 → DC bus 31 → feeder line 32 → electric railway car 70 → rail 37 → the negative terminal of DC power source 30.

From the feeding substation SS-3, the current flows in the form of a loop of the positive terminal of DC power source 30 → DC bus 31 → feeder line 32 → electric railway car 70 → rail 37 → VLD 50-2 → earth 38 → VLD 50-3 → rail 37 →the negative terminal of DC power source 30, and a branch current, after the passage of the electric railway car 79, flows in the course of rail 37 → the negative terminal of DC power source 30.

By measurement and comparison of the magnitudes, times and polarities of the passage currents of all these VLD 50-1 ∼ VLD 50-4, the ground fault detecting system can detect a ground fault accident section accurately. In the case of FIG. 5, the polarity of the VLD passage current of VLD 50-2 is "-", and hence it can be regarded as a load current. The polarity of the VLD passage current of VLD 50-3 is "+". However, the magnitude of the VLD current is not so large as a ground fault current, so that the system does not misjudge as occurrence of a ground fault.

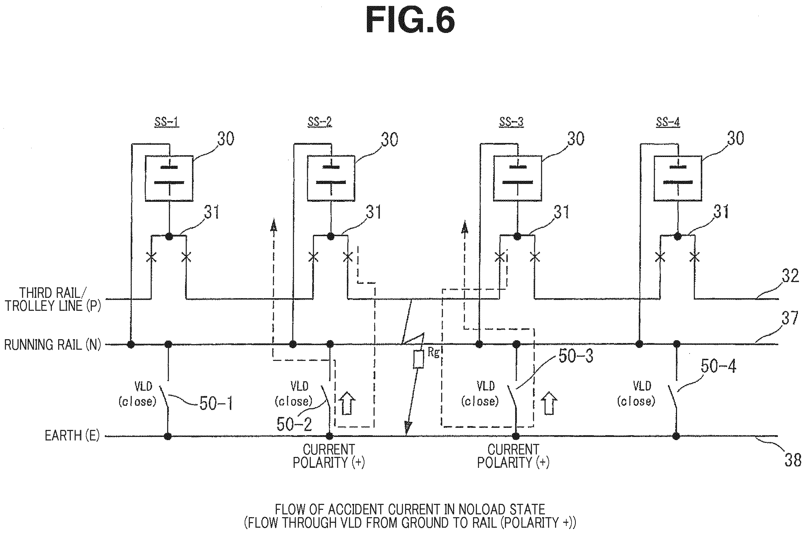

In the example of FIG. 6, a ground fault accident occurs in the feeder line 32 between the feeding substations SS-2 and SS-3 in a no-load state in which the electric car is not running. VLD 50-1 ∼ VLD 50-4 at all the feeding substations SS-1 ∼ SS-4 are in the closed state.

Therefore, from the feeding substation SS-2, the current flows in the form of a loop of the positive terminal of DC power source 30 → DC bus 31 → feeder line 32 → the ground fault point shown in the figure → earth 38 → VLD 50-2 → rail 37 → the negative terminal of DC power source 30. From the feeding substation SS-3, the current flows in the form of a loop of the positive terminal of DC power source 30 → DC bus 31 → feeder line 32 → the ground fault point shown in the figure → earth 38 → VLD 50-3 → rail 37 → the negative terminal of DC power source 30.

By measurement and comparison of the magnitudes, times and polarities of the passage currents of all these VLD 50-1 ∼ VLD 50-4, the ground fault detecting system can detect a ground fault accident section accurately. In the case of FIG. 6, the passage current polarities of the two adjacent VLD 50-2 and VLD 50-3 are both "+", and the passage currents become higher than the threshold because of the ground fault current. Thus, the condition of the before-mentioned detection mode 1 shown in FIG. 2 is met, and therefore, the system can judge that a ground fault accident has occurred in the section between the feeding substations SS-1 and SS-3.

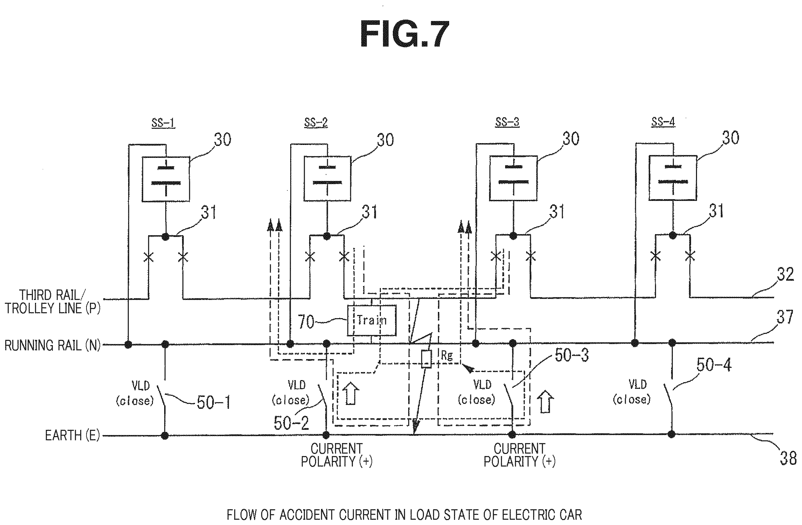

In the example of FIG. 7, while the electric railway car 70 is running under the feeder line 32 between the feeding substations SS-2 and SS-3, a ground fault accident occurs in this section. VLD 50-1 ∼ VLD 50-4 at all the feeding substations SS-1 ∼ SS-4 are in the closed state.

Therefore, from the feeding substation SS-2, the current flows in the form of a loop of the positive terminal of DC power source 30 → DC bus 31 → feeder line 32 → electric car 70 → rail 37 → the negative terminal of DC power source 30a, and a loop of the positive terminal of DC power source 30 → DC bus 31 → feeder line 32 → the ground fault point shown in the figure → earth 38 → VLD 50-2 → rail 37 → the negative terminal of DC power source 30.

From the feeding substation SS-3, the current flows in the form of a loop of the positive terminal of DC power source 30 → DC bus 31 → feeder line 32 → the ground fault point shown in the figure → earth 38 → VLD 50-3 → rail 37 → the negative terminal of DC power source 30, and a loop of the positive terminal of DC power source 30 → DC bus 31 → feeder line 32 → electric car 70 → rail 37 → the negative terminal of DC power source 30.

In the loop of the positive terminal of DC power source 30 → DC bus 31 → feeder line 32 → electric car 70 → rail 37 → VLD 50-2 → earth 38 → VLD 50-3 → rail 37 → the negative terminal of DC power source 30, no current flows because the ground fault current flowing in the direction from the earth 38 to rail 37 is greater in VLD 50-2.

By measurement and comparison of the magnitudes, times and polarities of the passage currents of all these VLD 50-1 ∼ VLD 50-4, the ground fault detecting system can detect a ground fault accident section accurately. In the case of FIG. 7, the passage current polarities of the two adjacent VLD 50-2 and VLD 50-3 are both "+", and the passage currents become higher than the threshold because of the ground fault current. Thus, the condition of the before-mentioned detection mode 1 shown in FIG. 2 is met, and therefore, the system can judge that a ground fault accident has occurred in the section between the feeding substations SS-2 and SS-3.

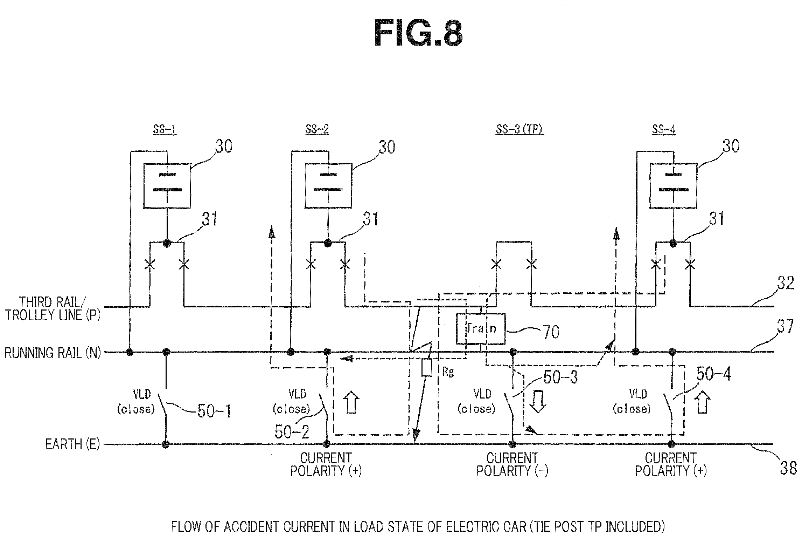

In the example of FIG. 8, the feeding substation SS-3 is constructed in the form of a tie post TP (a piece of equipment connecting an up feeder line and a down feeder line through a DC high speed circuit breaker as measures to a voltage drop). While the electric car 70 is running under the feeder line 32 at the tie post TP, a ground fault accident occurs at the feeder line 32 near the feeding substation SS-2. VLD 50-1 ∼ VLD 50-4 at all the feeding substations SS-1 ∼ SS-4 are in the closed state.

Therefore, from the feeding substation SS-2, the current flows in the form of a loop of the positive terminal of DC power source 30 → DC bus 31 → feeder line 32 → the ground fault point shown in the figure → earth 38 → VLD 50-2 → rail 37 → the negative terminal of DC power source 30, and a loop of the positive terminal of DC power source 30 → DC bus 31 → feeder line 32 → electric car 70 → rail 37 → the negative terminal of DC power source 30.

From the feeding substation SS-4, the current flows in the form of a loop of the positive terminal of DC power source 30 → DC bus 31 → feeder line 32 → the tie post TP → feeder line 32 → the ground fault point shown in the figure → VLD 50-4 → rail 37 → the negative terminal of DC power source 30. Moreover, a current branches off from the tie post TP, and flows through the electric car 70 → VLD 50-3 → earth 38 → VLD 50-4 → rail 37 → the negative terminal of the DC power source 30, and a current branches off from the electric car 70 and flows through rail 37 → the negative terminal of DC power source 30.

By measurement and comparison of the magnitudes, times and polarities of the passage currents of all these VLD 50-1 ∼ VLD 50-4, the ground fault detecting system can detect a ground fault accident section accurately. In the case of FIG. 8, the polarity of the passage current of VLD 50-2 is "+", , the polarity of the passage current of VLD 50-3 is "-", and the polarity of the passage current of VLD 50-4 is "+". Therefore, since the polarities of two adjacent VLDs are not both "+", and hence the system cannot judge an occurrence of a ground fault accident by using the detection mode 1 shown in FIG. 2.

However, the passage current of VLD 50-2 at the feeding substation SS-2 becomes higher than or equal to the threshold value, and the polarity of the current is "+". Therefore, the system can judge an occurrence of a ground fault accident according to the detection mode 2 or 3 shown in FIG. 2.

As in FIG. 3 ∼ FIG. 8, it is possible to prevent misjudgment of a ground fault accident by using the polarity and the magnitude of the passage current through VLD 50.

As shown in FIG. 3 ∼ FIG. 8, a judgment is made by using a lot of conditions such as whether a position of an accident is between two adjacent feeding substations or near one feeding substation, whether a load of an electric car is present or not, and the open or closed conditions of VLD 50. Accordingly, it is possible to discriminate a ground fault accident section more accurately.

### (5) Reduction of operation frequency of VLD 50 and setting of ground fault judgment threshold

To perform the ground fault detection securely, it is necessary to set the set value at a smaller value and to reduce the operation frequency of VLD 50. However, the threshold is so set as to satisfy the standard IEC62128-1/EN50122-1. For example, the minimum setting of VLD is 100 VDC and continuation of 3sec, and the frequency of the opening/closing operation in the whole of a railway route is limited to several times per day.

In the first practical example, a proper threshold free from malfunction is determined by performing a simulation taking account of influence of a large capacity moving load of the electric car 70.

In other words, the threshold for discriminating the ground fault accident is set by performing a following simulation to take the influence of the large capacity moving load of the electric car into consideration, with a ground fault discriminating threshold setting means, as another practical example according to the present invention.

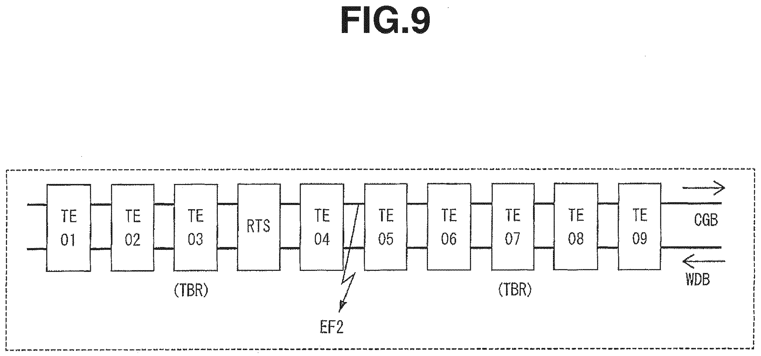

FIG. 9 shows, as an example, a configuration of DC feeding system or equipment to perform a ground fault accident simulation. In the example of FIG. 9, feeding substations TE01 ∼ TE09 and RTS are provided at predetermined intervals, and a ground fault accident occurs at a position EF2.

Test conditions at the time of simulation are as follows. An electric car is running, and a ground fault with a ground resistance of 1Ω is generated at an intermediate position between the feeding substations TE04 and TE05, and VLD (50) provided in each feeding substation is in a normal operating state (originally in the open state).

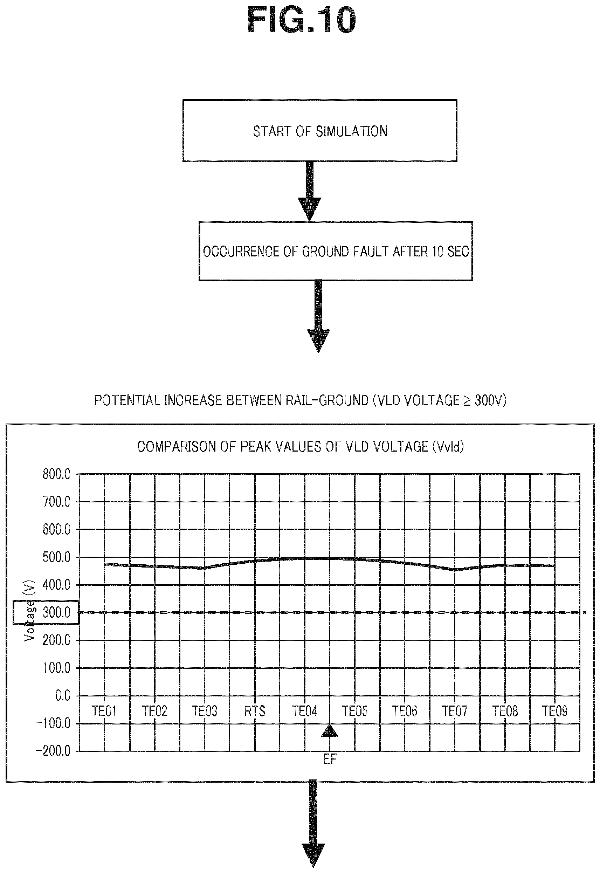

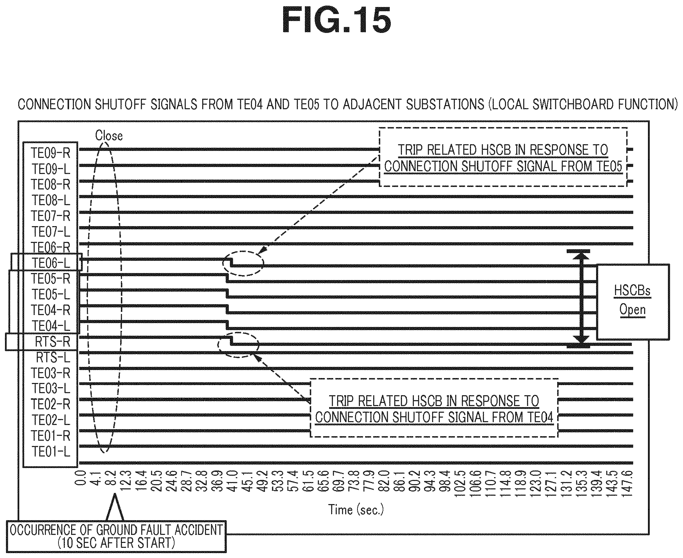

The simulation results are shown in FIG. 10∼FIG. 15.

FIG. 10 shows a process in which the simulation is started, then a ground fault is produced after 10 seconds, and therefore the potential between the rail and ground increases. The voltage of each VLD is higher than or equal to a voltage threshold of 300V.

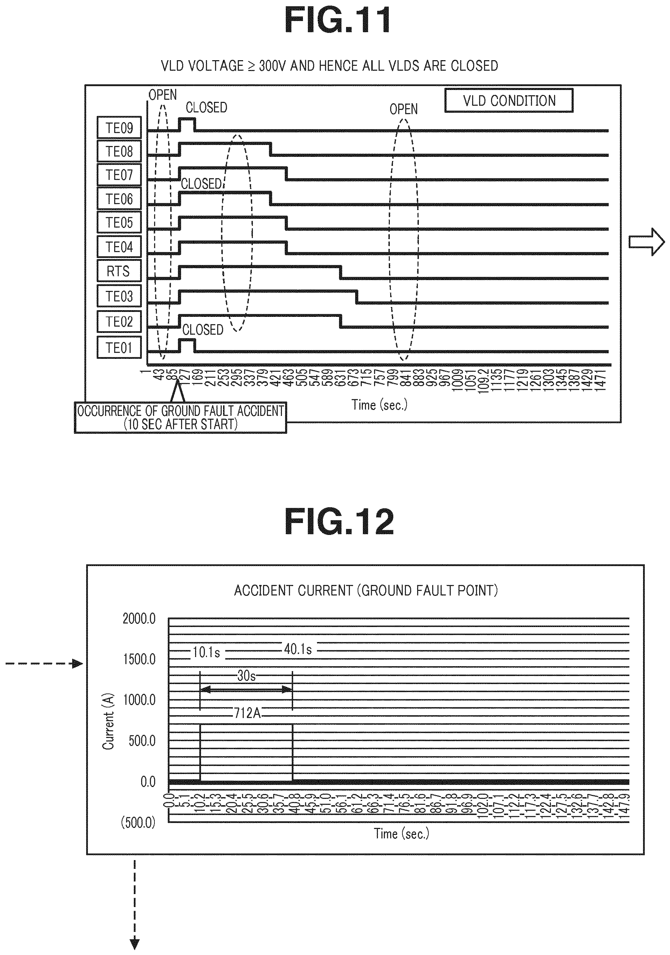

FIG. 11 shows the open/closed state of each VLD. At the time of occurrence of the ground fault accident, the VLD voltage of each VLD becomes higher than or equal to 300 V, and hence all VLDs are closed. Thereafter, each of the VLDs of TE01 and TE09 remoter from the ground fault accident position (EF2) returns to the open state in a short time sooner than the VLDs of TE04 and TE05 closer to the ground fault accident position. The closing periods of the VLDs of the other feeding substations are not uniform because of influence of the load.

FIG. 12 shows the waveform of a ground fault accident current. After the occurrence of the ground fault accident, the accident current of 712A flows and then the current decreases to zero after 30 seconds because the feeder circuit breaker is tripped in the ground fault accident section.

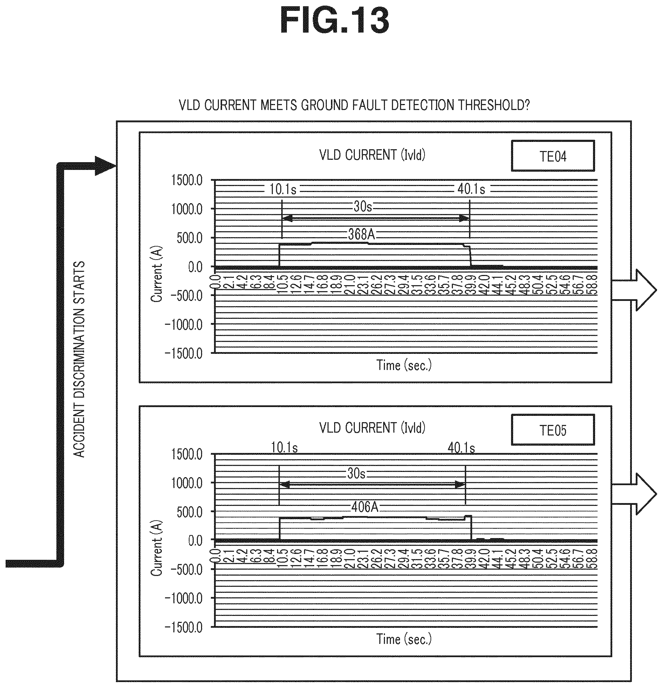

FIG. 13 shows the passage current (Ivld) of the VLD in each of the feeding substations TE04 and TE05 adjacent to the ground fault accident position. The current values become equal to 368A and 406A, respectively, beyond the threshold of 300A in the detection mode 1 mentioned with reference to FIG. 2, and each of the currents continues for 30 seconds.

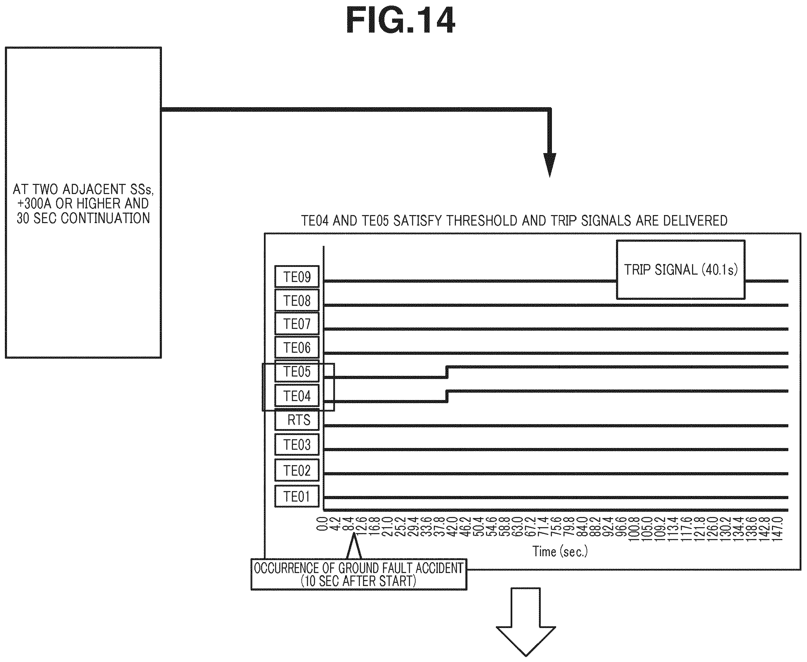

FIG. 14 shows that the trip signal is sent to the feeder circuit breaker of each of the feeding substations TE04 and TE05, 30 seconds after the occurrence of the ground fault accident because the condition of the threshold of the above-mentioned detection mode 1 is met.

As shown in FIG. 15, each of the feeding substations TE04 and TE05 delivers a connection or connective shutoff signal or breaker signal to an adjacent substation, in response to the trip signal sent as shown in FIG. 14. In response to the connection shutoff signal from TE04, the DC high speed circuit breaker (HSCB) of the related feeding substation RTS-R is tripped. In response to the connection shutoff signal from TE05, the DC high speed circuit breaker (HSCB) of the related feeding substation TE06-L is tripped.

By performing the simulation as shown in FIGS. 9∼15, it is possible to choose a proper threshold value free from malfunction for the threshold in the ground fault discrimination.

The thresholds for discriminating a ground fault accident in the ground fault discrimination device 60 are not limited to the before-mentioned values: the VLD passage current of 300A and the current continuation time of 30 seconds in the detection mode 1; the VLD passage current of 500A and the current continuation time of 30 seconds in the detection mode 2; the VLD passage current of 200A and the current continuation time of 60 seconds in the detection mode 3. It is possible to employ other values.

Furthermore, as another practical example, after the operation of tripping the feeder circuit breaker after the detection of a ground fault, it is possible to restart voltage application in a normal section or normal sections and to hold only the accident section in the current shutoff state by utilizing a reclosing function of the feeding circuit.

Furthermore, as still another practical example, it is possible to provide each function of the ground fault discrimination device 60 in a 1:N type centralized monitoring device. In other words, the VLD passage current after the closure of VLD in each feeding substation is transmitted to the centralized monitoring device. The centralized monitoring device discriminates an accident section from the distribution of VLD passage currents (conditions of VLD passage currents), and the centralized monitoring devices delivers a command to open the feeder circuit breaker, to the corresponding feeding substation.

As explained above, the first practical example provides the following effects.
(1) The ground fault detection system or method can detect a ground fault accident section more accurately by measuring and comparing the magnitude, conduction or continuation time and polarity of VLD passage current(s) after the input of the VLD at the time of ground fault.
(2) Moreover, the ground fault detection system or method can open the feeder circuit breaker of the substation in the section in which an accident is detected and open the feeder circuit breaker of adjacent or nearby substation(s) with a connection or connective breaker. By so doing, the system or method can perform the interruption of electricity in a properly limited section or part including the accident section.
(3) Moreover, by utilizing the reclosing function of the feeding circuit, the system or method can set only the accident section in the electricity shutoff state and put the normal section(s) in the reapplication state.

### (Practical Example 2)

Generally, a minute or fine ground fault caused by insulation deterioration and other factors in the DC electric railway facilities is a phenomenon tending to be latent, without reaching a protective region of the feeding circuit. In this practical example 2, by using a later-mentioned moving average voltage method, the system is configured to detect even such a minute ground fault phenomenon which is caused by deterioration of the insulator, etc. and which does not reach the protection region of the feeding circuit.

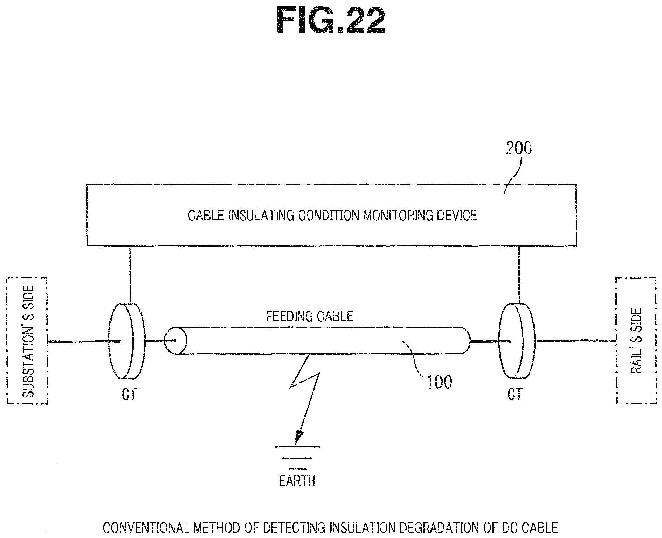

A conventional insulation deterioration detection method for a DC cable is shown, as an example, in FIG. 22. In FIG. 22, a cable insulating condition monitoring device 200 monitors the insulation deterioration by sensing a current in a feeding cable 100 with current transformer(s) CT.

Since the monitoring is performed for each of the feeding cables 100, each substation requires a plurality of sensing circuits, respectively, for a plurality of the feeding cables, and the whole railway route requires a lot of equipment pieces and large cost. Moreover, insulation deterioration may be caused in components such as insulators on the rail's side by aging degradation, and therefore, the conventional system does not cover the entire feeding circuits of the whole railway route.

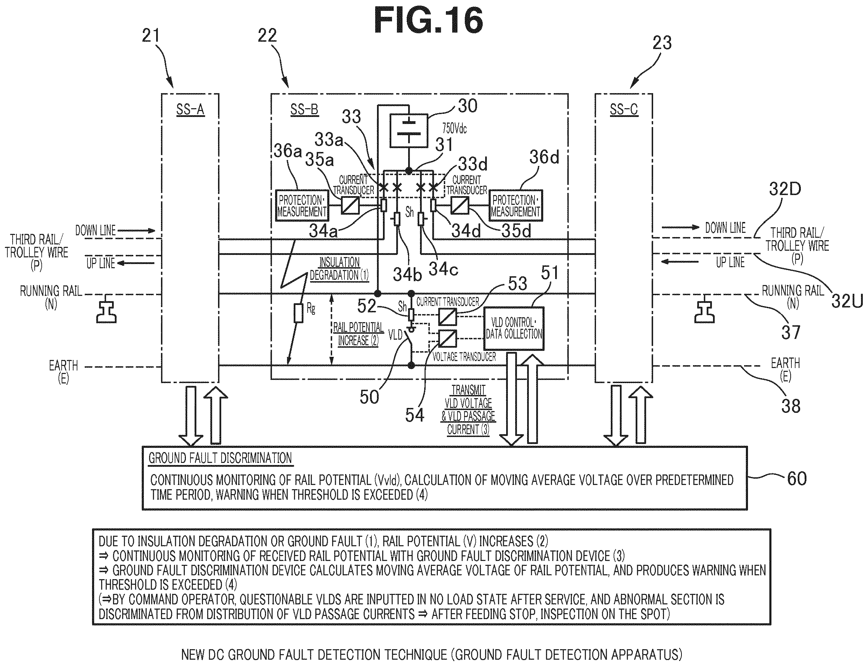

FIG. 16 shows a ground fault detection system in this practical example 2. The same reference numerals are used for the same components appearing in FIG. 1. The DC ground fault detection system of FIG. 16 is different from the system of FIG. 1 in that the ground fault discrimination device 60 of FIG. 16 is configured to perform a function of calculating a moving or running average of the rail-earth voltage supplied from the VLD control and data collection device 51, at predetermined time intervals, and judges a ground fault to be present when the calculated moving average voltage exceeds a threshold. In the other respects, the system of FIG. 16 is substantially identical to the system of FIG. 1.

In the configuration of FIG. 16, insulation deterioration or ground fault occurs between the down feeder line 32D and the earth 38, for example, in the feeding section of the DC feeding substation 22 (process (1)). In this case, the earth potential becomes higher than the rail potential because the rail is not grounded in the DC feeding system, and the potential between the rail 37 and the earth 38 becomes higher (process (2)).

The ground fault discrimination device 60 continuously monitors the rail potential (Vvld) transmitted from each VLD control and data collection device 51 (process 3). Furthermore, the ground fault discrimination device 60 calculates a moving average over a predetermined time period, traces the data at any time, makes a judgment of occurrence of a ground fault when the threshold is exceeded and produces a warning (process (4)).

The above-mentioned threshold is set equal to a value (a greatest moving average voltage at a steady state + a tolerance), for example.

The high resistance ground fault discrimination is possible even in a system having no VLDs, by continuous measurement of the rail potential and the moving average voltage calculation of the second practical example.

In the case of the judgment of the occurrence of the ground fault in the above-mentioned process (4), the following action is required because, by the ground fault, the rail potential (Vvld) is increased over a wide area and hence the discrimination of the ground fault accident section is difficult.

First, the system inputs all the VLDs in questionable section(s) in a no-load state after the end of the service hours, for example, and in a feeding voltage applied state, and checks the distribution of the VLD passage currents (Ivld). Since the ground fault accident current is concentrated in the accident section, the system can discriminate the accident section by checking this phenomenon.

The following is explanation on related items including the calculation of the moving average voltage.

### (1) The rail voltage waveform and moving average voltage in the steady state

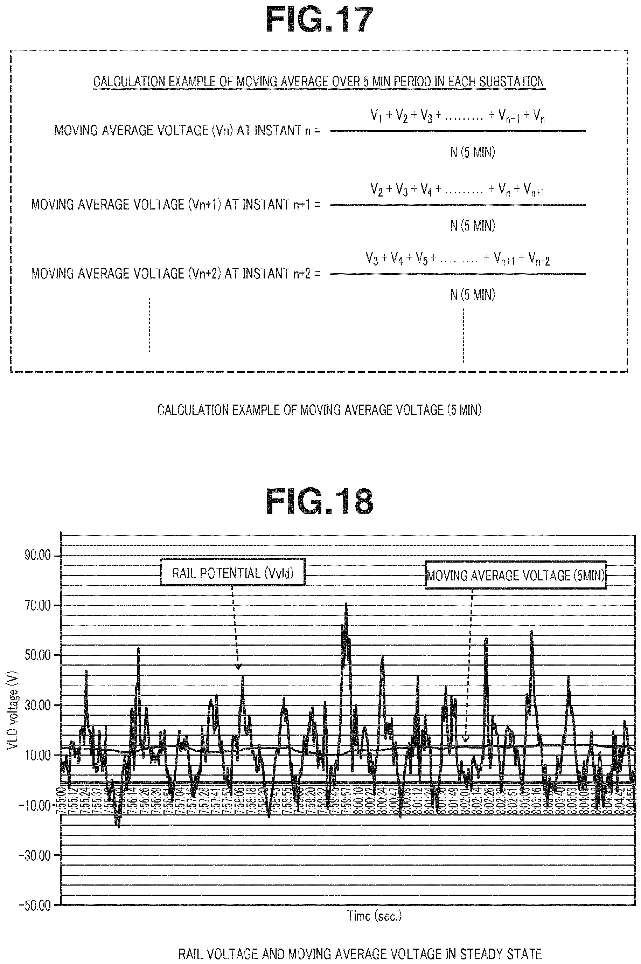

FIG. 17 shows one example of the calculation of the moving average voltage. FIG. 18 shows, as an example, the waveform of the rail potential (Vvld) between the rail and earth in one feeding substation in the steady state, and the waveform of the moving average over 5 minutes. In Fig. 18, the potential fluctuates violently, but the moving average voltage over 5 minutes varies more stably.

### (2) The rail voltage waveform and moving average voltage at the time of occurrence of a high resistance ground fault

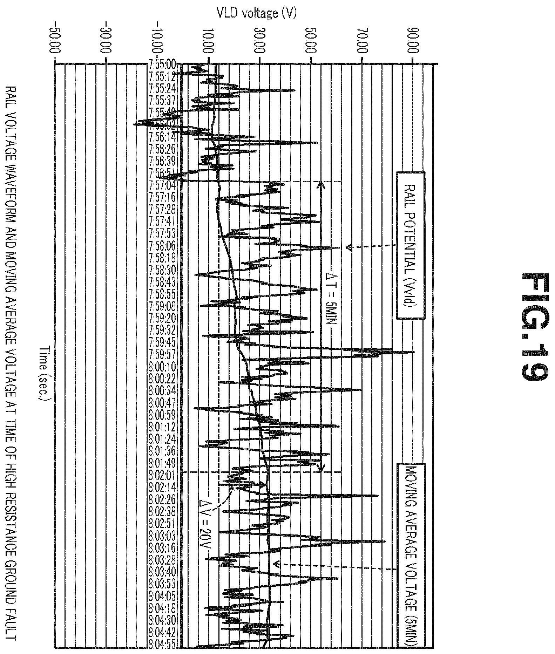

FIG. 19 shows, as an example, the waveform of the rail potential (Vvld) and the waveform of the moving average over 5 minutes in the case of a 20V potential increase caused by minute ground fault due to insulation deterioration etc. As shown in FIG. 19, after the ground fault, the moving average voltage tends to increase gradually from 14V to 34V during a time period ΔT.

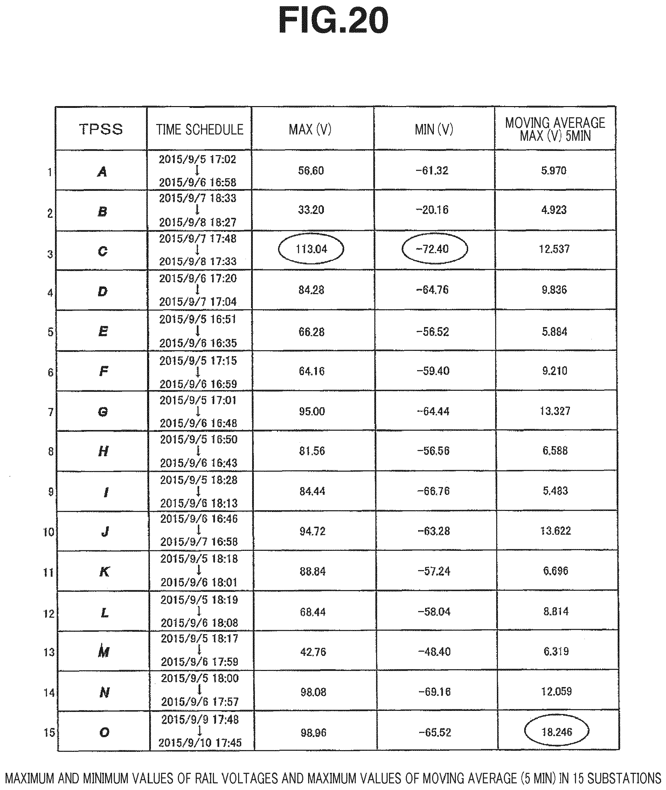

FIG. 20 shows, as an example, the maximum and minimum values of the rail potentials and the maximum values of the moving average (5min) in 15 substations in the same route (DC 750V feeding system). The maximum value of the moving average is about +20V, at most.

In this practical example 2, the tolerance is set about +20V, and the threshold value for the ground fault discrimination is set equal to the maximum moving average voltage 20V + the tolerance 20V = +40V.

### (3) Polarity of VLD passage current (Ivld)

The detection method mentioned in (1) and (2) above is limited to the current direction (polarity of +) from the ground (earth) to rail at the time of a ground fault. The polarity of the VLD passage current (Ivld) is the same as in FIG. 6. As shown in FIG. 6, the current flows in the direction from the earth's side to the rail's side in the case of a ground fault in the no-load state after the VLD input, and therefore, it is possible to limit the polarity.

### (4) Reduction of VLD operation frequency

The operation frequency is reduced to perform the ground fault detection securely. The threshold is so set as to satisfy the standard IEC62128-1/EN50122-1. In the standard, it is assumed that, in the feeding system of DC 750V, the rail potential increases beyond 120V, several times per day. However, in the actual measurement, the peak time is shorter than or equal to about 2 seconds. Accordingly, it is possible to reduce the number of closing operations of the VLD significantly with the setting of the threshold for the VLD closing operation (it is possible to limit the operation frequency of the opening/closing operations to several times per day in the whole of the route by setting a minimum set value of VLD equal to or greater than 120V DC·3 sec.)

In the practical example 2 as mentioned above, it is possible to obtain the following effects.
(1) A minute or fine ground fault caused by insulation deterioration and other factors in the DC electric railway facilities does not reach a protective region of the feeding circuit, and generally tends to be latent. The system can grasp the minute or fine ground fault phenomenon which is caused by the insulation deterioration etc., and which does not reach the protection region of the feeding circuit, by using the moving average voltage method of this practical example according to the invention.
(2) Moreover, the system can discriminate the accident section by inputting all the VLDs in questionable section(s) in the no-load state in which the feeding voltage is applied, after the end of the service hours, for example, and checking the distribution of the VLD passage currents (Ivld) by the use of the characteristic of concentration of the ground fault accident current at the accident section.
(3) It is possible to improve the ability of maintenance by enabling the discrimination of an accident section with a 24-hour operation system.
(4) The rail potential (Vvld) is varied by the load of an electric car and the VLD is operated between the open and closed states on the basis of the threshold. The rail potential decreases with the closure of VLD. However, the closing time is on the order of seconds. Moreover, the operation frequency is low. Therefore, no or little influence is exerted from the VLD opening and closing operations, on the moving average method with the setting on the order of minutes.
(5) In the case of facilities equipped with VLD, no large investment for facilities is required.
(6) Even in the facilities having no VLD, it is possible to employ the high resistance ground fault discrimination system of the moving average voltage calculation type if the rail potential can be measured. Moreover, it is possible to discriminate an accident section by performing the feeding voltage application in a stepwise manner in the no-load state, and detecting a section in which the rail potential increases, that is a section in which the current is concentrated.

## Claims

1. A DC ground fault detection system of a DC electric railway to supply DC power to an electric railway car (70) through feeder lines (30, 32D, 32U) from a plurality of feeding substations (21 (SS-A), 22(SS-B), 23 (SS-C)), the DC ground fault detection system comprising:
a voltage limiting means (50, 52, 53, 54, 51) provided in each of feeding sections of the feeding substations, for collecting electric information, the voltage limiting means including a short-circuit switch (VLD 50) connected between a rail (37) and an earth (38) and arranged to be closed when a rail-earth voltage (Vvld) between the rail and the earth becomes higher than or equal to a preset voltage, the electric information collected by the voltage limiting means including the rail-earth voltage and a passage current (Ivld) passing through the short-circuit switch after closure of the short-circuit switch; and
a ground fault discriminating means to discriminate a ground fault accident from a current magnitude, a conduction time and a conduction direction of the passage current flowing through the short-circuit switch by using the electric information collected by each of the voltage limiting means.

2. The DC ground fault detection system as claimed in Claim 1, wherein each of the voltage limiting means (50, 52, 53, 54, 51) and the ground fault discriminating means (60) are connected to enable exchange of data therebetween;
the voltage limiting means is configured to deliver the collected electric information to the ground fault discriminating means, the ground fault discriminating means is configured to deliver a trip command to trip a feeder circuit breaker (33) at least in an accident section in which the ground fault accident is judged to be present, to the voltage limiting means, and the voltage limiting means (50, 52, 53, 54, 51) is configured to trip the feeder circuit breaker of at least the accident section in response to the trip command.

3. The DC ground fault detection system as claimed in Claim 2, wherein the ground fault discriminating means (60) is configured to deliver the trip command to trip the feeder circuit breaker (33) in a feeding section near the accident section, to the voltage limiting means; and the voltage limiting means is configured to trip the feeder circuit breaker of the feeding section near the accident section, in response to the trip command.

4. A DC ground fault detection method for a DC electric railway to supply DC power to an electric railway car (70) through feeder lines (30, 32D, 32U) from a plurality of feeding substations (21 (SS-A), 22(SS-B), 23 (SS-C)), the DC ground fault detection method comprising:
an information collecting step of collecting electric information with a voltage limiting means (50, 52, 53, 54, 51) which is provided in each of feeding sections of the feeding substations, and which includes a short-circuit switch (VLD 50) interposed between a rail (37) and an earth (38) and arranged to be closed when a rail-earth voltage (Vvld) becomes higher than or equal to a preset voltage, the electric information collected at the information collecting step including the rail-earth voltage (Vvld) and a passage current (Ivld) passing through the short-circuit switch after closure of the short-circuit switch; and
a ground fault discriminating step of discriminating a ground fault accident from a current magnitude, a conduction time and a conduction direction of the passage current flowing through the short-circuit switch (VLD 50), with a ground fault discriminating means (60) using the electric information.

5. The DC ground fault detection method as claimed in Claim 4, wherein the DC ground fault detection method comprises:
an information sending step of sending the electric information collected by the voltage limiting means, from the voltage limiting means to the ground fault discriminating means which is connected with each of the voltage limiting means to enable exchange of data therebetween;
a trip command delivering step of delivering, from the ground fault discriminating means to the voltage limiting means, a trip command to trip a feeder circuit breaker (33) at least in an accident section in which a ground fault accident is judged to be present; and
a tripping step of tripping the feeder circuit breaker of at least the accident section in response to the trip command with the voltage limiting means.

6. The DC ground fault detection method as claimed in Claim 4 or 5, wherein the ground fault discriminating step includes an operation of judging the ground fault accident to be present when the passage current (Ivld) collected by the voltage limiting means in the feeding section of each of two adjacent feeding substations has a current magnitude greater than or equal to a preset magnitude value and has a conduction time longer than or equal to a predetermined time length.

7. The DC ground fault detection method as claimed in Claim 4 or 5, wherein the ground fault discriminating step includes an operation of judging the ground fault accident to be present when the passage current (Ivld) collected by the voltage limiting means in the feeding section of one of the feeding substations has a current magnitude greater than or equal to a preset magnitude value and has a conduction time longer than or equal to a predetermined time length.

8. The DC ground fault detection method as claimed in one of Claims 4 to 7, wherein, in the ground fault discriminating step, the ground fault accident is judged to be present when the conduction direction of the passage current of the short circuit switch collected by the voltage limiting means is from the ground to the rail.

9. The DC ground fault detection method as claimed in one of Claims 4 to 8, wherein, in the ground fault discriminating step, the ground fault accident is discriminated in accordance with conditions in the plurality of the feeding sections, the conditions in the feeding sections including a presence/absence condition of an electric car load and an open/closed condition of the short-circuit switch.

10. The DC ground fault detection method as claimed in one of Claims 4 to 9, wherein the DC ground fault detection method comprises a ground fault discrimination threshold setting step of determining a threshold for discriminating the ground fault accident by performing a simulation of the ground fault accident, taking into consideration, influence of a great capacity moving load of an electric railway car, with a ground fault discrimination threshold setting means.

11. The DC ground fault detection system as claimed in Claim 1, wherein the ground fault discriminating means (60) is configured to calculate a moving average voltage, over a predetermined time period, of the rail-earth voltage (Vvld) sensed and collected by the voltage limiting means (50, 52, 53, 54, 51), and to judge presence of a ground fault when the calculated moving average voltage exceeds a threshold.

12. The DC ground fault detection system as claimed in Claim 11, wherein the threshold is set equal to a sum of a maximum moving average voltage at a steady state and a tolerance.

13. The DC ground fault detection system as claimed in Claim 11 or 12, wherein the ground fault discriminating means (60) is configured to discriminate a ground fault accident section in accordance with a distribution of passage currents through the short-circuit switches in the feeding sections collected by the voltage limiting means when a feeding voltage is applied in each of the feeding sections of the substations in a no-load state.

## Patentansprüche

1. Gleichstrom-Erdschlusserfassungssystem einer elektrischen Gleichstrom-Eisenbahn zur Versorgung eines elektrischen Eisenbahnwagens (70) mit Gleichstrom über Zuführungsleitungen (30, 32D, 32U) von einer Vielzahl von einspeisenden Unterstationen (21 (SS-A), 22 (SS-B), 23 (SS-C)), wobei das Gleichstrom-Erdschlusserfassungssystem umfasst:
eine Spannungsbegrenzungseinrichtung (50, 52, 53, 54, 51), die in jedem Einspeiseabschnitt der einspeisenden Unterstationen bereitgestellt ist, um elektrische Informationen zu sammeln, wobei die Spannungsbegrenzungseinrichtung einen Kurzschlussschalter (VLD 50) umfasst, der zwischen eine Schiene (37) und eine Erde (38) angeschlossen und so angeordnet ist, dass er geschlossen wird, wenn eine Schiene-Erde-Spannung (Vvld) zwischen der Schiene und der Erde größer oder gleich einer voreingestellten Spannung wird, wobei die von der Spannungsbegrenzungseinrichtung gesammelten elektrischen Informationen die Schiene-Erde-Spannung und einen Durchgangsstrom (Ivld) umfassen, der nach dem Schließen des Kurzschlussschalters durch den Kurzschlussschalter fließt; und
eine Erdschluss-Unterscheidungseinrichtung, um einen Erdschlussstörfall anhand einer Stromstärke, einer Leitungszeit und einer Leitungsrichtung des durch den Kurzschlussschalter fließenden Durchgangsstroms unter Verwendung der von jeder der Spannungsbegrenzungseinrichtungen gesammelten elektrischen Informationen zu unterscheiden.

2. Gleichstrom-Erdschlusserfassungssystem nach Anspruch 1, wobei jede der Spannungsbegrenzungseinrichtungen (50, 52, 53, 54, 51) und die Erdschluss-Unterscheidungseinrichtung (60) verbunden sind, um einen Datenaustausch zwischen ihnen zu ermöglichen;
die Spannungsbegrenzungseinrichtung so konfiguriert ist, dass sie die gesammelten elektrischen Informationen an die Erdschluss-Unterscheidungseinrichtung liefert, die Erdschluss-Unterscheidungseinrichtung so konfiguriert ist, dass sie einen Auslösebefehl zum Auslösen eines Einspeiseleistungsschalters (33) zumindest in einem Störfallabschnitt, in dem beurteilt wird, dass der Erdschlussstörfall vorhanden ist, an die Spannungsbegrenzungseinrichtung liefert, und die Spannungsbegrenzungseinrichtung (50, 52, 53, 54, 51) so konfiguriert ist, dass sie den Einspeiseleistungsschalter zumindest des Störfallabschnitts in Reaktion auf den Auslösebefehl auslöst.

3. Gleichstrom-Erdschlusserfassungssystem nach Anspruch 2, wobei die Erdschluss-Unterscheidungseinrichtung (60) so konfiguriert ist, dass sie den Auslösebefehl zum Auslösen des Einspeiseleistungsschalters (33) in einem Einspeiseabschnitt in der Nähe des Störfallabschnitts an die Spannungsbegrenzungseinrichtung liefert; und die Spannungsbegrenzungseinrichtung so konfiguriert ist, dass sie den Einspeiseleistungsschalter des Einspeiseabschnitts in der Nähe des Störfallabschnitts in Reaktion auf den Auslösebefehl auslöst.

4. Gleichstrom-Erdschlusserfassungsverfahren für eine elektrische Gleichstrom-Eisenbahn zur Versorgung eines elektrischen Eisenbahnwagens (70) mit Gleichstrom über Zuführungsleitungen (30, 32D, 32U) von einer Vielzahl von einspeisenden Unterstationen (21 (SS-A), 22 (SS-B), 23 (SS-C)), wobei das Gleichstrom-Erdschlusserfassungsverfahren umfasst:
einen Informationssammelschritt des Sammelns elektrischer Informationen mit einer Spannungsbegrenzungseinrichtung (50, 52, 53, 54, 51), die in jedem Einspeiseabschnitt der einspeisenden Unterstationen bereitgestellt ist und die einen Kurzschlussschalter (VLD 50) umfasst, der zwischen einer Schiene (37) und einer Erde (38) angeordnet ist und so eingerichtet ist, dass er geschlossen wird, wenn eine Schiene-Erde-Spannung (Vvld) größer oder gleich einer voreingestellten Spannung wird, wobei die elektrischen Informationen, die bei dem Informationssammelschritt gesammelt werden, die Schiene-Erde-Spannung (Vvld) und einen Durchgangsstrom (Ivld), der durch den Kurzschlussschalter nach dem Schließen des Kurzschlussschalters fließt, umfassen; und
einen Erdschlussunterscheidungsschritt zum Unterscheiden eines Erdschlussstörfalls anhand einer Stromstärke, einer Leitungszeit und einer Leitungsrichtung des durch den Kurzschlussschalter (VLD 50) fließenden Durchgangsstroms mit einer Erdschluss-Unterscheidungseinrichtung (60) unter Verwendung der elektrischen Informationen.

5. Gleichstrom-Erdschlusserfassungsverfahren nach Anspruch 4, wobei das Gleichstrom-Erdschlusserfassungsverfahren umfasst:
einen Informationssendeschritt des Sendens der von der Spannungsbegrenzungseinrichtung gesammelten elektrischen Informationen von der Spannungsbegrenzungseinrichtung an die Erdschluss-Unterscheidungseinrichtung, die mit jeder der Spannungsbegrenzungseinrichtungen verbunden ist, um einen Datenaustausch zwischen ihnen zu ermöglichen;
einen Auslösebefehlslieferschritt, bei dem von der Erdschluss-Unterscheidungseinrichtung ein Auslösebefehl an die Spannungsbegrenzungseinrichtung geliefert wird, um einen Einspeiseleistungsschalter (33) zumindest in einem Störfallabschnitt auszulösen, in dem beurteilt wird, dass ein Erdschlussstörfall vorhanden ist; und
einen Auslöseschritt, bei dem der Einspeiseleistungsschalter zumindest des Störfallabschnitts als Reaktion auf den Auslösebefehl mit der Spannungsbegrenzungseinrichtung ausgelöst wird.

6. Gleichstrom-Erdschlusserfassungsverfahren nach Anspruch 4 oder 5, wobei der Erdschlussunterscheidungsschritt einen Vorgang umfasst, bei dem der Erdschlussstörfall als vorhanden beurteilt wird, wenn der Durchgangsstrom (Ivld), der von der Spannungsbegrenzungseinrichtung im Einspeiseabschnitt jeder von zwei benachbarten einspeisenden Unterstationen erfasst wird, eine Stromgröße aufweist, die größer oder gleich einem voreingestellten Größenwert ist, und eine Leitungszeit aufweist, die größer oder gleich einer vorbestimmten Zeitlänge ist.

7. Gleichstrom-Erdschlusserfassungsverfahren nach Anspruch 4 oder 5, wobei der Erdschlussunterscheidungsschritt einen Vorgang umfasst, bei dem der Erdschlussstörfall als vorhanden beurteilt wird, wenn der Durchgangsstrom (Ivld), der von der Spannungsbegrenzungseinrichtung im Einspeiseabschnitt einer der einspeisenden Unterstationen erfasst wird, eine Stromgröße aufweist, die größer oder gleich einem voreingestellten Größenwert ist, und eine Leitungszeit aufweist, die größer oder gleich einer vorbestimmten Zeitlänge ist.

8. Gleichstrom-Erdschlusserfassungsverfahren nach einem der Ansprüche 4 bis 7, wobei in dem Erdschlussunterscheidungsschritt der Erdschlussstörfall als vorhanden beurteilt wird, wenn die Leitungsrichtung des von der Spannungsbegrenzungseinrichtung erfassten Durchgangsstroms des Kurzschlussschalters von der Erde zu der Schiene verläuft.

9. Gleichstrom-Erdschlusserfassungsverfahren nach einem der Ansprüche 4 bis 8, wobei in dem Erdschlussunterscheidungsschritt der Erdschlussstörfall in Übereinstimmung mit Zuständen in der Vielzahl der Einspeiseabschnitte unterschieden wird, wobei die Zustände in den Einspeiseabschnitten einen An-/Abwesenheitszustand einer elektrischen Wagenlast und einen offenen/geschlossenen Zustand des Kurzschlussschalters umfassen.

10. Gleichstrom-Erdschlusserfassungsverfahren nach einem der Ansprüche 4 bis 9, wobei das Gleichstrom-Erdschlusserfassungsverfahren einen Schritt zum Einstellen eines Schwellenwerts der Erdschlussunterscheidung umfasst, bei dem ein Schwellenwert zur Unterscheidung des Erdschlussstörfalls bestimmt wird, indem eine Simulation des Erdschlussstörfalls unter Berücksichtigung des Einflusses einer sich bewegenden Last mit großer Kapazität eines elektrischen Eisenbahnwagens mit einer Einrichtung zum Einstellen eines Schwellenwerts der Erdschlussunterscheidung durchgeführt wird.

11. Gleichstrom-Erdschlusserfassungssystem nach Anspruch 1, wobei die Erdschluss-Unterscheidungseinrichtung (60) so konfiguriert ist, dass sie eine gleitende Durchschnittsspannung der von der Spannungsbegrenzungseinrichtung (50, 52, 53, 54, 51) erfassten und gesammelten Schiene-Erde-Spannung (Vvld) über eine vorbestimmte Zeitspanne berechnet und das Vorhandensein eines Erdschlusses beurteilt, wenn die berechnete gleitende Durchschnittsspannung einen Schwellenwert überschreitet.

12. Gleichstrom-Erdschlusserfassungssystem nach Anspruch 11, wobei der Schwellenwert gleich einer Summe aus einer maximalen gleitenden Durchschnittsspannung in einem stabilen Zustand und einer Toleranz gesetzt ist.

13. Gleichstrom-Erdschlusserfassungssystem nach Anspruch 11 oder 12, wobei die Erdschluss-Unterscheidungseinrichtung (60) so konfiguriert ist, dass sie einen Erdschlussstörfallabschnitt in Übereinstimmung mit einer Verteilung von Durchgangsströmen durch die Kurzschlussschalter in den Einspeiseabschnitten unterscheidet, die von der Spannungsbegrenzungseinrichtung gesammelt werden, wenn eine Einspeisespannung in jedem der Einspeiseabschnitte der Unterstationen in einem lastfreien Zustand angelegt wird.

## Revendications

1. Système de détection de défaut à la terre en courant continu d'un chemin de fer électrique à courant continu pour fournir une alimentation en courant continu à une voiture de chemin de fer électrique (70) par l'intermédiaire de lignes d'alimentation (30, 32D, 32U) à partir d'une pluralité de postes d'alimentation (21 (SS-A), 22 (SS-B), 23 (SS-C)), le système de détection de défaut à la terre en courant continu comprenant :
un moyen de limitation de tension (50, 52, 53, 54, 51) prévu dans chacune des sections d'alimentation des postes d'alimentation, pour collecter des informations électriques, le moyen de limitation de tension incluant un commutateur de court-circuit (VLD 50) connecté entre un rail (37) et une terre (38) et agencé pour être fermé lorsqu'une tension rail-terre (Vvld) entre le rail et la terre devient supérieure ou égale à une tension prédéfinie, les informations électriques collectées par le moyen de limitation de tension incluant la tension rail-terre et un courant de passage (Ivld) passant à travers le commutateur de court-circuit après la fermeture du commutateur de court-circuit ; et
un moyen de discrimination de défaut à la terre pour discriminer un accident de défaut à la terre à partir d'une amplitude de courant, d'un temps de conduction et d'une direction de conduction du courant de passage circulant à travers le commutateur de court-circuit en utilisant les informations électriques collectées par chacun des moyens de limitation de tension.

2. Système de détection de défaut à la terre en courant continu selon la revendication 1, dans lequel chacun des moyens de limitation de tension (50, 52, 53, 54, 51) et le moyen de discrimination de défaut à la terre (60) sont connectés de façon à permettre un échange de données entre eux ;
le moyen de limitation de tension est configuré pour délivrer les informations électriques collectées au moyen de discrimination de défaut à la terre, le moyen de discrimination de défaut à la terre est configuré pour délivrer un ordre de déclenchement pour déclencher un disjoncteur d'alimentation (33) au moins dans une section d'accident dans laquelle l'accident de défaut à la terre est jugé présent, au moyen de limitation de tension, et le moyen de limitation de tension (50, 52, 53, 54, 51) est configuré pour déclencher le disjoncteur d'alimentation d'au moins la section d'accident en réponse à l'ordre de déclenchement.

3. Système de détection de défaut à la terre en courant continu selon la revendication 2, dans lequel le moyen de discrimination de défaut à la terre (60) est configuré pour délivrer l'ordre de déclenchement pour déclencher le disjoncteur d'alimentation (33) dans une section d'alimentation proche de la section d'accident au moyen de limitation de tension ; et le moyen de limitation de tension est configuré pour déclencher le disjoncteur d'alimentation de la section d'alimentation proche de la section d'accident en réponse à l'ordre de déclenchement.

4. Procédé de détection de défaut à la terre en courant continu pour un chemin de fer électrique à courant continu pour fournir une alimentation en courant continu à une voiture de chemin de fer électrique (70) par l'intermédiaire de lignes d'alimentation (30, 32D, 32U) à partir d'une pluralité de postes d'alimentation (21 (SS-A), 22 (SS-B), 23 (SS-C)), le procédé de détection de défaut à la terre en courant continu comprenant :
une étape de collecte d'informations consistant à collecter des informations électriques avec un moyen de limitation de tension (50, 52, 53, 54, 51) qui est prévu dans chacune des sections d'alimentation des postes d'alimentation et qui inclut un commutateur de court-circuit (VLD 50) interposé entre un rail (37) et une terre (38) et agencé pour être fermé lorsqu'une tension rail-terre (Vvld) devient supérieure ou égale à une tension prédéfinie, les informations électriques collectées à l'étape de collecte d'informations incluant la tension rail-terre (Vvld) et un courant de passage (Ivld) passant à travers le commutateur de court-circuit après la fermeture du commutateur de court-circuit ; et
une étape de discrimination de défaut à la terre consistant à discriminer un accident de défaut à la terre à partir d'une amplitude de courant, d'un temps de conduction et d'une direction de conduction du courant de passage circulant à travers le commutateur de court-circuit (VLD 50), avec un moyen de discrimination de défaut à la terre (60) utilisant les informations électriques.

5. Procédé de détection de défaut à la terre en courant continu selon la revendication 4, dans lequel le procédé de détection de défaut à la terre en courant continu comprend :
une étape d'envoi d'informations consistant à envoyer les informations électriques collectées par les moyens de limitation de tension des moyens de limitation de tension au moyen de discrimination de défaut à la terre qui est connecté à chacun des moyens de limitation de tension pour permettre un échange de données entre eux ;
une étape de délivrance d'ordre de déclenchement consistant à délivrer, du moyen de discrimination de défaut à la terre au moyen de limitation de tension, un ordre de déclenchement pour déclencher un disjoncteur d'alimentation (33) au moins dans une section d'accident dans laquelle un accident de défaut à la terre est jugé présent ; et
une étape de déclenchement consistant à déclencher le disjoncteur d'alimentation d'au moins la section d'accident en réponse à l'ordre de déclenchement avec le moyen de limitation de tension.

6. Procédé de détection de défaut à la terre en courant continu selon la revendication 4 ou 5, dans lequel l'étape de discrimination de défaut à la terre inclut une opération consistant à juger que l'accident de défaut à la terre est présent lorsque le courant de passage (Ivld) collecté par le moyen de limitation de tension dans la section d'alimentation de chacun de deux postes d'alimentation adjacents présente une amplitude de courant supérieure ou égale à une valeur d'amplitude prédéfinie et un temps de conduction supérieur ou égal à une durée prédéterminée.

7. Procédé de détection de défaut à la terre en courant continu selon la revendication 4 ou 5, dans lequel l'étape de discrimination de défaut à la terre inclut une opération consistant à juger que l'accident de défaut à la terre est présent lorsque le courant de passage (Ivld) collecté par le moyen de limitation de tension dans la section d'alimentation de l'un des postes d'alimentation présente une amplitude de courant supérieure ou égale à une valeur d'amplitude prédéfinie et un temps de conduction supérieur ou égal à une durée prédéterminée.

8. Procédé de détection de défaut à la terre en courant continu selon l'une des revendications 4 à 7, dans lequel, à l'étape de discrimination de défaut à la terre, l'accident de défaut à la terre est jugé présent lorsque la direction de conduction du courant de passage du commutateur de court-circuit collectée par le moyen de limitation de tension est de la terre vers le rail.

9. Procédé de détection de défaut à la terre en courant continu selon l'une des revendications 4 à 8, dans lequel, à l'étape de discrimination de défaut à la terre, l'accident de défaut à la terre est discriminé en fonction des conditions dans la pluralité des sections d'alimentation, les conditions dans les sections d'alimentation incluant une condition de présence/absence d'une charge de voiture électrique et une condition ouverte/fermée du commutateur de court-circuit.

10. Procédé de détection de défaut à la terre en courant continu selon l'une des revendications 4 à 9, dans lequel le procédé de détection de défaut à la terre en courant continu comprend une étape de réglage de seuil de discrimination de défaut à la terre consistant à déterminer un seuil pour discriminer l'accident de défaut à la terre en effectuant une simulation de l'accident de défaut à la terre, en prenant en considération l'influence d'une charge mobile de grande capacité d'une voiture de chemin de fer électrique, avec un moyen de réglage de seuil de discrimination de défaut à la terre.

11. Système de détection de défaut à la terre en courant continu selon la revendication 1, dans lequel le moyen de discrimination de défaut à la terre (60) est configuré pour calculer une tension moyenne mobile, sur une période de temps prédéterminée, de la tension rail-terre (Vvld) détectée et collectée par le moyen de limitation de tension (50, 52, 53, 54, 51) et pour juger de la présence d'un défaut à la terre lorsque la tension moyenne mobile calculée dépasse un seuil.

12. Système de détection de défaut à la terre en courant continu selon la revendication 11, dans lequel le seuil est fixé égal à une somme d'une tension moyenne mobile maximale en régime permanent et d'une tolérance.

13. Système de détection de défaut à la terre en courant continu selon la revendication 11 ou 12, dans lequel le moyen de discrimination de défaut à la terre (60) est configuré pour discriminer une section d'accident de défaut à la terre en fonction d'une distribution de courants de passage à travers les commutateurs de court-circuit dans les sections d'alimentation collectés par le moyen de limitation de tension lorsqu'une tension d'alimentation est appliquée dans chacune des sections d'alimentation des postes dans un état non chargé.
